(19) **Europäisches Patentamt / European Patent Office / Office européen des brevets**

(11) **EP 2 236 990 A2**

(12) **EUROPÄISCHE PATENTANMELDUNG**

(43) Veröffentlichungstag:
**06.10.2010 Patentblatt 2010/40**

(51) Int Cl.:
**G01D 5/244** (2006.01)

(21) Anmeldenummer: **10156107.4**

(22) Anmeldetag: **10.03.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(30) Priorität: **31.03.2009 DE 102009016663**

(71) Anmelder: **BALLUFF GmbH**
**73765 Neuhausen (DE)**

(72) Erfinder:
• **Burkhardt, Thomas**
**73119 Zell (DE)**
• **Dr. Zern, Achim**
**74080 Heilbronn (DE)**

(74) Vertreter: **Hoeger, Stellrecht & Partner**
**Patentanwälte**
**Uhlandstrasse 14c**
**70182 Stuttgart (DE)**

(54) **Positions-/Wegmesssystem**

(57) Es wird ein Positions-/Wegmesssystem bereitgestellt, umfassend mindestens einen magnetisch kodierten Maßkörper mit mindestens einer Kodierungsspur und eine Sensoreinrichtung mit mindestens einem für die Kodierung sensitiven Sensor, bereitgestellt, wobei die mindestens eine Kodierungsspur mindestens in einer ersten Richtung periodisch alternierend angeordnete Hauptfelder mindestens eines ersten Typs und eines zweiten Typs aufweist, bei dem die Hauptfelder des ersten Typs und die Hauptfelder des zweiten Typs jeweils in Unterfelder von mindestens zwei unterschiedlichen Typen unterteilt sind, wobei die Unterfelder vom ersten Typ und zweiten Typ Nordpolfelder und Südpolfelder sind, bei dem eine Länge und/oder Kodierungsstärke der Unterfelder innerhalb eines Hauptfeldes mindestens in der ersten Richtung variiert und bei dem bei den Hauptfeldern des ersten Typs die Gesamtlänge in der ersten Richtung und/oder Gesamtfläche von Feldbereichen des ersten Typs größer ist als die Gesamtlänge und/oder Gesamtfläche von Feldbereichen, welche nicht vom ersten Typ sind, und bei den Hauptfeldern des zweiten Typs die Gesamtlänge in der ersten Richtung und/oder Gesamtfläche von Feldbereichen des zweiten Typs größer ist als die Gesamtlänge und/oder Gesamtfläche von Feldbereichen, welche nicht vom zweiten Typ sind.

FIG.1

EP 2 236 990 A2

**Beschreibung**

Die Erfindung betrifft ein Positions-/Wegmesssystem, umfassend mindestens einen magnetisch kodierten Maßkörper mit mindestens einer Kodierungsspur und eine Sensoreinrichtung mit mindestens einem für die Kodierung sensitiven Sensor, wobei die mindestens eine Kodierungsspur mindestens in einer ersten Richtung periodisch alternierend angeordnete Hauptfelder mindestens eines ersten Typs und eines weiten Typs aufweist.

Wegsensoren mit magnetisch kodiertem Maßkörper sind in dem Buch "Lineare Weg- und Abstandssensoren" von T. Burkhardt, A. Feinäugle, S. Fericean und A. Forkl, Verlag moderne Industrie, Bibliothek der Technik, Band 271, München, 2004 beschrieben.

In der nicht vorveröffentlichten deutschen Patenanmeldung Nr. 10 2008 055 680.7 vom 28. Oktober 2008 der gleichen Anmelderin ist ein Positions-/Wegmesssystem, umfassend einen Sensorkopf und einen kodierten Maßköper beschrieben. Der Maßkörper erstreckt sich in einer ersten Richtung und in einer quer zur ersten Richtung liegenden zweiten Richtung. Er weist einen Absolutpositionsbestimmungsbereich und einen Inkrementalpositionsbestimmungsbereich mit einer Kodierung in der ersten Richtung auf. Der Absolutpositionsbestimmungsbereich weist eine Kodierung der zweiten Richtung auf. Der Sensorkopf weist eine erste Sensoreinrichtung mit einer Sensorauflösung parallel zur ersten Richtung auf, welche dem Inkrementalpositionsbestimmungsbereich zugeordnet ist. Ferner weist er eine zweite Sensoreinrichtung mit einer Sensorauflösung in der zweiten Richtung auf, welche dem Absolutpositionsbestimmungsbereich zugeordnet ist.

Aus der US 2008/0061771 A1 ist ein ringförmiger magnetischer Kodierer bekannt, welcher eine Mehrzahl von magnetischen Südpolen und magnetischen Nordpolen umfasst, die alternierend angeordnet sind. Der magnetische Kodierer weist eine Struktur auf, bei welcher ein Wechsel in der Breite der magnetischen Südpole und magnetischen Nordpole in einer Rotationsrichtung gemäß einem Rotationswinkel es erlaubt, den Rotationswinkel zu spezifizieren.

Aus der DE 1 930 976 ist eine Anordnung zum Erzeugen einer langgestreckten, sich in Abhängigkeit vom zurückgelegten Weg kontinuierlich ändernden Signalkurve unter Zurhilfenahme einer Teilung, die zu einer nachgeschalteten Abtastvorrichtung Relativbewegungen ausführt, bekannt, wobei zum Erzeugen der Signalkurve eine Gitterteilung mit zunehmendem und abnehmendem Strich-/Lückenverhältnis vorgesehen ist.

Aus der DE 100 28 136 A1 ist ein Positionsmesssystem zur Bestimmung der relativen Lage zweier zueinander bewegten Objekte mit einer dem ersten Objekt zugeordneten Inkrementalspur mit einer periodischen Strichstruktur, einer dem zweiten Objekt zugeordneten Abtasteinheit zur Abtastung der Strichstruktur und zur Erzeugung eines entsprechenden Inkrementalsignals sowie Mitteln zur Erzeugung einer Absolutposition zur Information bezüglich der Lage der zueinander beweglichen Objekte bekannt. Die Ausdehnung der Striche entlang der Erstreckungsrichtung der Inkrementalspur variiert zumindest auf einem Teil der Breite der Inkrementalspur derart, dass der periodischen Strichstruktur eine Struktur mit einer Absolutpositionsinformation überlagert ist.

Aus der DE 10 2005 055 905 A1 ist eine Längenmessanordnung bestehend aus mindestens einem magnetischen Encoder, welcher relativ zu einer Sensoraufnahme entlang einer Messrichtung beweglich ist, wobei der magnetische Encoder mehrere unterschiedlich magnetische Segmente aufweist und die Sensoraufnahme in voneinander distanziert positionierten Magnetfeldsensoranordnungen ausgestattet ist, die jeweils die gleiche Anzahl von Magnetfeldsensoren enthalten, bekannt.

Aus der DE 10 2007 008 870 A1 ist eine Anordnung zur Absolutbestimmung der Linearposition oder der durch einen Winkel ausgedrückten Drehposition zweier relativ zueinander verschiebbaren oder drehbaren Körper bekannt, bei der ein erster Körper einen Maßstab mit einer Anzahl von in Messrichtung in ihrer Polung alternierenden magnetischen Segmenten und ein zweiter Körper mindestens zwei voneinander beabstandete magnetfeldempfindliche Sensoren aufweist, und die eine Auswerteeinheit umfasst. Der Maßstab ist aus Gruppen von mindestens zwei magnetischen Segmenten aufgebaut. Die Längen der magnetischen Segmente stimmen in Messrichtung in mindestens einer Gruppe untereinander überein und die Längen der magnetischen Segmente der unterschiedlichen Gruppen sind voneinander verschieden.

Aus der DE 100 52 086 A1 ist eine Positionsmesseinrichtung mit relativ zueinander beweglichen Messelementen bekannt, wobei das eine Messelement auf einem Träger eine magnetische Skala in Form wenigstens einer Reihe von Segmenten unterschiedlicher Magnetisierung aufweist, die an ihren Grenzen Streufelder erzeugen, und wobei das andere Messelement einen Magnetfeldsensor zur Erfassung der Streufelder aufweist. Die Segmente sind gleichgerichtet magnetisiert, haben aber eine unterschiedlich starke remanente Magnetisierung.

Der Erfindung liegt die Aufgabe zu Grunde, ein Positions-/Wegmesssystem der eingangs genannten Art bereitzustellen, bei welchem sich ein minimierter Oberwellenanteil ergibt.

Diese Aufgabe wird bei dem eingangs genannten Positions-/Wegmesssystem erfindungsgemäß dadurch gelöst, dass die Hauptfelder des ersten Typs und die Hauptfelder des zweiten Typs jeweils in Unterfelder von mindestens zwei unterschiedlichen Typen unterteilt sind, wobei die Unterfelder vom ersten Typ und zweiten Typ Nordpolfelder und Südpolfelder sind, dass eine Länge und/oder eine Kodierungsstärke der Unterfelder innerhalb eines Hauptfeldes mindestens in der ersten Richtung variiert und dass bei den Hauptfeldern des ersten Typs die Gesamtlänge in der ersten Richtung und/oder Gesamtfläche von Feldbereichen des ersten Typs größer ist als die Gesamtlänge und/oder Gesamtfläche von Feldbereichen, welche nicht vom ersten Typ sind, und bei den Hauptfeldern des zweiten Typs die Gesamtlänge in der ersten Richtung und/oder Gesamtfläche von Feldbereichen des zweiten Typs größer ist als die Gesamtlänge und/oder Gesamtfläche von Feldbereichen, welche nicht vom zweiten Typ sind.

Bei der erfindungsgemäßen Lösung sind die Hauptfelder, welche im arithmetischen Mittelwert bzw. im Flächenintegral über die Unterfeldverteilung vom ersten Typ beziehungsweise vom zweiten Typ sind, in Unterfelder unterteilt. Durch eine definiert gewählte Unterteilung mit den Unterfeldern und insbesondere durch eine stochastische oder periodische Modulation lässt sich eine Oberwellenreduktion für die Sensoreinrichtung erreichen.

Es hat sich beispielsweise gezeigt, dass bei magnetisch kodierten Maßkörpern, wenn die Sensoreinrichtung mit relativ geringem Abstand (kleinem Luftspalt) oberhalb des Maßkörpers positioniert ist, der effektive Feldverlauf für die Sensoreinrichtung stark von einem sinusförmigen Feldverlauf abweicht. Die daraus für die Sensoreinrichtung resultierenden Oberwellen können insbesondere bei großer Polbreite (Länge der Hauptfelder in der ersten Richtung) nicht mehr durch eine Auswerteeinrichtung kompensiert werden. Durch die erfindungsgemäße Lösung erfolgt eine Oberwellenminimierung bereits bei der Feldentstehung durch Vorsehen von Unterfeldern unterschiedlicher Typen (mindestens zwei Typen) innerhalb eines Hauptfelds.

Bei einem Positions-/Wegmesssystem mit magnetisch kodiertem Maßkörper ist es dadurch insbesondere möglich, die Sensoreinrichtung mit geringem Abstand zu dem Maßkörper zu positionieren, das heißt einen kleinen Luftspalt beispielsweise unterhalb 4 mm vorzusehen. Auch bei solchem kleinen Abstand ergibt sich ein Signal mit geringer Linearitätsabweichung. Die Signalstärke ist aufgrund der hohen Feldamplitude bei geringem Luftspalt sehr hoch und es gibt sich ein hohes Signal-Rauschverhältnis. Es lässt sich dadurch ein magnetisches Positions-/Wegmesssystem realisieren, welches einen hohen Signal-Rauschabstand, eine geringe Linearitätsabweichung und eine optimierte Hysterese aufweist. Dabei lassen sich bei entsprechend großer Polbreite der Hauptfelder auch große Abstände (großer Luftspalt) realisieren.

Die Variation der Länge der Unterfelder kann in eine Richtung oder in mehrere Richtungen erfolgen. Beispielsweise ist eine Variation in einer Messrichtung und gegebenenfalls zusätzlich in einer Richtung quer zur Messrichtung (Breitenrichtung) vorgesehen.

Beispielsweise im Falle einer magnetischen Kodierung lässt sich eine unterschiedliche Kodierungsstärke über vollständige und teilweise Magnetisierung erreichen. Bei vollständiger Magnetisierung weist beispielsweise ein Nordpolfeld eine Stärke von 30 mT auf, ein Südpolfeld eine Stärke von -30 mT (ein neutrales Feld weist eine Magnetfeldstärke von 0 mT auf). Durch Teilmagnetisierung kann beispielsweise ein Feld mit einer Magnetfeldstärke von 10 mT erzeugt werden.

Grundsätzlich umfassen die Unterfelder eines Hauptfeldes mindestens zwei unterschiedliche Typen aus folgenden Typen; erster Typ, zweiter Typ und dritter oder weiterer Typ. Dadurch ist eine entsprechende effektive Feldbeeinflussung des Beaufschlagungsfelds des kodierten Maßkörpers für die Sensoreinrichtung möglich.

Die mindestens eine Kodierungsspur weist eine Ausdehnung in der ersten Richtung und in einer zweiten Richtung quer zur ersten Richtung auf und die Sensoreinrichtung ist beabstandet zu dem mindestens einen Maßkörper in einer dritten Richtung, welche quer zu der ersten Richtung und quer zu der zweiten Richtung ist, positioniert. Dadurch lässt sich auf einfache Weise die relative Position der Sensoreinrichtung zu dem kodierten Maßkörper bestimmen.

Insbesondere ist die erste Richtung eine Messrichtung für die relative Position und/oder den Weg beziehungsweise die Bewegung der Sensoreinrichtung zu dem mindestens einen Maßkörper. Es kann dabei vorgesehen sein, dass eine Variation in den Unterfeldern nur in der Messrichtung erfolgt oder in der Messrichtung und in der zweiten Richtung quer zu der Messrichtung erfolgt. Dadurch lässt sich auch in der zweiten Richtung eine feinere Unterteilung zur Erhöhung der Messgenauigkeit erreichen.

Grundsätzlich ist die mindestens eine Kodierungsspur als Inkrementalpositionsbestimmungsbereich ausgebildet.

Es kann ein zusätzlicher Absolutpositionsbestimmungsbereich vorgesehen sein. Es ist möglich, absolute Positionen zu bestimmen, wenn die mindestens eine Kodierungsspur an dem Inkrementalpositionsbestimmungsbereich ist und eine Kalibrationsfahrt zu einer Referenzposition durchgeführt wird.

In der oben genannten nicht vorveröffentlichten deutschen Patentanmeldung ist ein Positions-/Wegmesssystem beschrieben, welches einen Absolutpositionsbestimmungsbereich umfasst. Ein solcher kann zusätzlich bei der erfindungsgemäßen Lösung vorgesehen werden.

Ganz besonders vorteilhaft ist es, wenn die Variation in den Unterfeldern der Hauptfelder so gewählt ist, dass ein effektiver sensorwirksamer Feldverlauf der mindestens einen Kodierungsspur für die Sensoreinrichtung bezüglich Oberwellen minimiert ist und insbesondere sinusförmig ist. Dadurch ergibt sich eine geringe Linearitätsabweichung, sodass die relative Position der Sensoreinrichtung zu dem kodierten Maßkörper mit hoher Genauigkeit ermittelbar ist.

Ganz besonders vorteilhaft ist es, wenn die Variation in den Unterfeldern der Hauptfelder periodisch mit der Periode der Hauptfelderanordnung oder stochastisch ist. Dadurch lässt sich auf einfache Weise eine Oberwellenminimierung erreichen. Insbesondere erfolgt eine Variation in der Art einer Pulsweitenmodulation. Es ist alternativ auch möglich, dass die Unterfelder stochastisch innerhalb der Hauptfelder verteilt sind, um eine Oberwellenreduktion zu erreichen.

Aus dem gleichen Grund ist es günstig, wenn die Variation in den Unterfeldern periodisch moduliert ist.

Vorteilhafterweise ist die Variation in den Unterfeldern eine Tastverhältnisvariation, das heißt, das Tastverhältnis von unterschiedlichen Unterfeldern wird variiert, um eine Oberwellenreduktion zu erhalten.

Insbesondere ist das variierte Tastverhältnis sinusoidal, um eine Oberwellenminimierung zu erhalten.

Bei einem fertigungstechnisch günstigen Ausführungsbeispiel ist oder umfasst das variierende Tastverhältnis eine Variation der Länge mindestens in der ersten Richtung von Unterfeldern. Dadurch lässt sich auf einfache Weise eine periodische Modulation erhalten. Durch unterschiedliche Abmessungen von unterschiedlichen Unterfeldern erhält man eine optimierte Feldgestaltung.

Beispielsweise ist die Variation eine Variation des Verhältnisses der Länge mindestens in der ersten Richtung von nächst- oder übernächst-benachbarten Unterfeldern unterschiedlichen Typs. Dadurch lässt sich auf einfache Weise eine periodische Modulation erreichen.

Bei einem Ausführungsbeispiel sind mindestens in der ersten Richtung Unterfelder unterschiedlichen Typs alternierend angeordnet, wobei Paare von Unterfeldern unterschiedlichen Typs aufeinanderfolgend angeordnet sind und die Paare die gleiche Länge mindestens in der ersten Richtung aufweisen und das Verhältnis der Längen mindestens in der ersten Richtung bei unterschiedlichen Paaren variiert. Dadurch lässt sich auf einfache Weise eine periodische Modulation in der Art einer Pulsweitenmodulation erreichen.

Insbesondere ist das Verhältnis der Längen sinusoidal, das heißt die Verhältnisse der Längen bei unterschiedlichen Paaren haben als Hüllkurve bzw. Flächenintegral eine Sinuskurve.

Es ist alternativ oder zusätzlich möglich, dass das variierende Tastverhältnis eine Variation der Kodierungsstärke ist oder umfasst. Bei einem magnetisch kodierten Maßkörper lässt sich eine solche variierende Kodierungsstärke beispielsweise durch eine variierende Magnetisierungsstärke erreichen.

Insbesondere sind Unterfelder des dritten Typs für die Kodierung neutrale Felder. Solche dritten Felder sind beispielsweise bei magnetisch kodierten Maßkörpern magnetisch neutrale, das heißt nicht magnetisierte Bereiche. (Bei einem kapazitiv kodierten Maßkörper sind solche Unterfelder des dritten Typs elektrisch neutrale Bereiche.)

Es ist möglich, dass eine Variation bezüglich Länge und/oder Kodierungsstärke von Unterfeldern in einer zweiten Richtung quer zu ersten Richtung zusätzlich vorgesehen ist, das heißt eine periodische Modulation auch in der zweiten Richtung vorgesehen ist.

Die mindestens eine Kodierungsspur ist magnetisch kodiert und die Hauptfelder vom ersten Typ und vom zweiten Typ sind Nordpolfelder und Südpolfelder und die Unterfelder vom ersten Typ und zweiten Typ sind Nordpolfelder und Südpolfelder. Bei einem entsprechenden magnetischen Positions-/Wegemesssystem lässt sich eine geringe Linearitätsabweichung bei hohem Signal-Rauschverhältnis und optimierter Hysterese erreichen. Eine Sensoreinrichtung kann auch mit geringem Luftspalt zu dem Maßkörper positioniert werden und die entsprechend hohe Feldbeaufschlagung ergibt ein hohes Signal-Rauschverhältnis bzw. einen geringen Oberwellenanteil, wenn die Unterfelder eine genügend kleine Ausdehnung aufweisen.

Es können dabei Unterfelder vom dritten Typ vorgesehen sein, welche magnetisch neutrale Felder sind.

Die Hauptfelder vom ersten Typ und zweiten Typ sind bei einem magnetisch kodierten Maßkörper über ihre Fläche integriert Nordpolfelder und Südpolfelder, wobei die Hauptfelder vom ersten Typ und vom zweiten Typ nicht homogene Nordpolfelder und Südpolfelder sind, sondern integral als solche wirken. Die Gesamtlänge von Feldbereichen des gleichen Typs überwiegt dabei die Gesamtlänge von Feldbereichen von anderen Typen mindestens in der ersten Richtung. (Wenn kein Feld vom Typ Nordpol und Südpol überwiegt, stellt sich für ein Hauptfeld die Gesamtfeldstärke Null ein; ein Nulldurchgang ist in gewissen Bereichen erwünscht.)

Die nachfolgende Beschreibung bevorzugter Ausführungsformen dient im Zusammenhang mit den Zeichnungen der näheren Erläuterung der Erfindung. Es zeigen:

Figur 1    eine schematische Darstellung einer Ausführungsform eines erfin- dungsgemäßen Positions-/Wegemesssystems mit einem Maßkörper und einem Sensorkopf;

Figur 2(a)    eine Teildarstellung eines Ausführungsbeispiels eines aus dem Stand der Technik bekannten Maßkörpers in Draufsicht;

Figur 2(b)    den Kodierungsverlauf für den Maßkörper gemäß Figur 2(a) längs der Richtung X;

Figur 3(a)    eine schematische Darstellung eines Ausführungsbeispiels eines erfindungsgemäßen Maßkörpers in Draufsicht;

Figur 3(b)    den Kodierungsverlauf (T) für den Maßkörper gemäß Figur 3(a) in der Richtung X und den resultierenden magnetischen Feldverlauf (wenn der Maßkörper magnetisch kodiert ist);

Figur 4      eine Teildarstellung von Unterfeldern des Maßkörpers gemäß Figur 3(a);

Figur 5      eine weitere schematische Darstellung von Unterfeldern;

Figur 6      einen Ausschnitt aus einem weiteren Ausführungsbeispiel eines erfindungsgemäßen Maßkörpers; und

Figur 7      einen Ausschnitt aus einem weiteren Ausführungsbeispiels eines erfindungsgemäßen Maßkörpers.

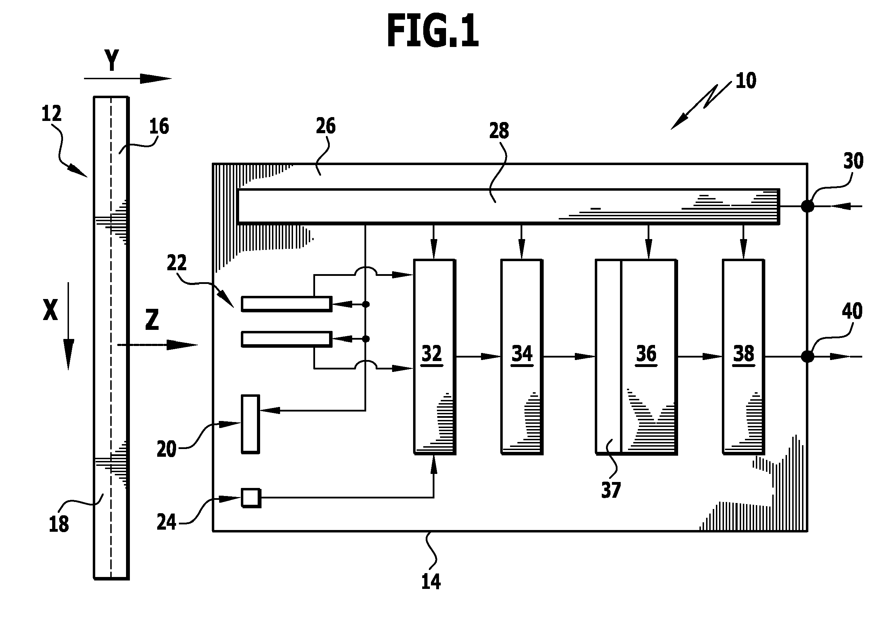

Eine Ausführungsform eines erfindungsgemäßen Positions-/Wegmesssystems, welche in Figur 1 schematisch gezeigt und dort mit 10 bezeichnet ist, umfasst einen kodierten Maßkörper 12. Bei der beschriebenen Ausführungsform ist der Maßkörper 12 magnetisch kodiert. Der Maßkörper 12 selber weist einen Träger auf, auf welchem die magnetische Kodierung angeordnet ist. Die magnetische Kodierung ist beispielsweise durch ein Kunststoffband gebildet, welches flexibel ist und magnetisierbar ist. Die Kodierung des Maßkörpers 12 erfolgt durch eine entsprechende abwechselnde Anordnung von Polfeldern des Typs Nordpol und Polfeldern des Typs Südpol.

Die magnetischen Feldlinien dieser Polfelder bilden ein dreidimensionales Vektorfeld. In diesem Feld ist ein Sensorkopf 14 insbesondere beweglich angeordnet.

Der Maßkörper 12 erstreckt sich in einer ersten Richtung X und in einer zweiten Richtung Y, welche quer und insbesondere senkrecht zur ersten Richtung X ist. Die erste Richtung X ist eine Messrichtung, in welcher die Position bzw. der Weg (die Bewegung) des Sensorkopfs 14 relativ zum Maßkörper 12 ermittelbar ist. Der Sensorkopf 14 ist in einer dritten Richtung Z beabstandet zu dem Maßkörper 12, wobei die dritte Richtung quer und insbesondere senkrecht zur ersten Richtung X ist und quer und insbesondere senkrecht zur zweiten Richtung Y ist. Zwischen dem Sensorkopf 14 und dem Maßkörper 12 liegt ein Luftspalt. Die Polfelder weisen eine Normalenrichtung parallel zur dritten Richtung Z auf.

Wie weiter untenstehend noch erläutert wird, umfasst der Maßkörper 12 (mindestens) eine Kodierungsspur 15 als einen Inkrementalpositionsbestimmungsbereich 16, welche entsprechend magnetisch kodiert ist.

Es kann auch eine weitere Kodierspur als Absolutpositionsbestimmungsbereich 18 vorgesehen sein. Bezüglich Positions-/Wegmesssystemen, welche einen Inkrementalpositionsbestimmungsbreich und einen Absolutpositionsbestimmungsbereich aufweisen, wird auf die nicht vorveröffentlichte deutsche Patentanmeldung Nr. 10 2008 055 680.7 vom 28. Oktober 2008 der gleichen Anmelderin verwiesen. Auf diese Anmeldung wird ausdrücklich Bezug genommen.

Der Sensorkopf 14 umfasst eine Mehrzahl von Sensoren. Bei der erfindungsgemäßen Lösung umfasst der Sensorkopf 14 eine erste Sensoreinrichtung 20 mit einem oder mehreren Sensoren, welche eine Magnetfeldauflösung in der ersten Richtung X aufweisen. Die erste Sensoreinrichtung 20 ist dem Inkrementalpositionsbestimmungsbereich 16 zugeordnet.

Ferner umfasst der Sensorkopf 14 fakultativ eine zweite Sensoreinrichtung 22 mit einem oder mehreren Sensoren, welche eine Magnetfeldauflösung in der zweiten Richtung Y aufweisen. Die zweite Sensoreinrichtung 22 ist dem Absolutpositionsbestimmungsbereich 18 zugeordnet.

Es kann eine dritte Sensoreinrichtung 24 vorgesehen sein, welche eine Magnetfeldauflösung in der dritten Richtung Z aufweist. Durch die dritte Sensoreinrichtung 24 lassen sich beispielsweise Verkippungen des Sensorkopfs 14 relativ zum Maßkörper 12 detektieren.

Die Sensoreinrichtungen 20, 22, 24 sind in einem Gehäuse 26 angeordnet. In dem Gehäuse 26 ist eine Stromversorgungseinrichtung 28 für die Sensoreinrichtungen 20, 22, 24 positioniert. Der Stromversorgungseinrichtung 28 sind ein oder mehrere externe Anschlüsse 30 für eine externe Stromversorgung zugeordnet. Fakultativ kann der Stromversorgungseinrichtung 28 auch eine an dem Sensorkopf 14 angeordnete Stromquelle zugeordnet sein oder eine Empfangseinrichtung für eine drahtlose Stromversorgung.

Den Sensoreinrichtungen 20, 22, 24 ist ein Verstärker 32 nachgeordnet, welcher ebenfalls in dem Gehäuse 26 positioniert ist. Die Sensoreinrichtungen 20, 22, 24 stellen ihre Signale dem Verstärker 32 bereit, in dem sie verstärkt werden.

Es ist auch möglich, dass dem Verstärker 32 ein Analog/Digital-Wandler nachgeordnet ist, welcher analoge Signale der Sensoreinrichtungen in digitale Signale wandelt.

Es ist grundsätzlich auch möglich, dass eine oder mehrere Sensoreinrichtungen bereits digitale Signale bereitstellen. In diesem Fall ist kein Analog/Digital-Wandler 34 notwendig.

Die verstärkten und gegebenenfalls gewandelten Signale werden einer Auswerteeinrichtung 36 bereitgestellt. Diese ist insbesondere durch einen Mikrocontroller (oder ASIC oder DSP usw.) gebildet. Sie kann dabei einen Interpolator 37 umfassen.

Die Auswerteeinrichtung 36 stellt die entsprechenden Signale einer Signalanpassungseinrichtung 38 bereit, wobei diese Signale an einem Ausgang 40 des Sensorkopfs 14 abgreifbar sind. Es kann dabei eine drahtlose Signalübertragung oder eine Leitungsübertragung von entsprechenden Auswertungssignalen erfolgen.

Die Sensoreinrichtungen umfassen einen oder mehrere magnetfeldsensitive Sensoren. Beispielsweise umfasst die erste Sensoreinrichtung einen analogen magnetfeldsensitiven Weg-/Positionssensor, welcher eine entsprechende Auflösung in der ersten Richtung X aufweist. Bei einem Ausführungsbeispiel umfasst diese erste Sensoreinrichtung 20 einen ersten Magnetfeldsensor und einen zweiten Magnetfeldsensor, welche um 90° phasenversetzte Signale ausgeben. Solche Magnetfeldsensoren werden auch als Sinussensoren oder Cosinussensoren bezeichnet.

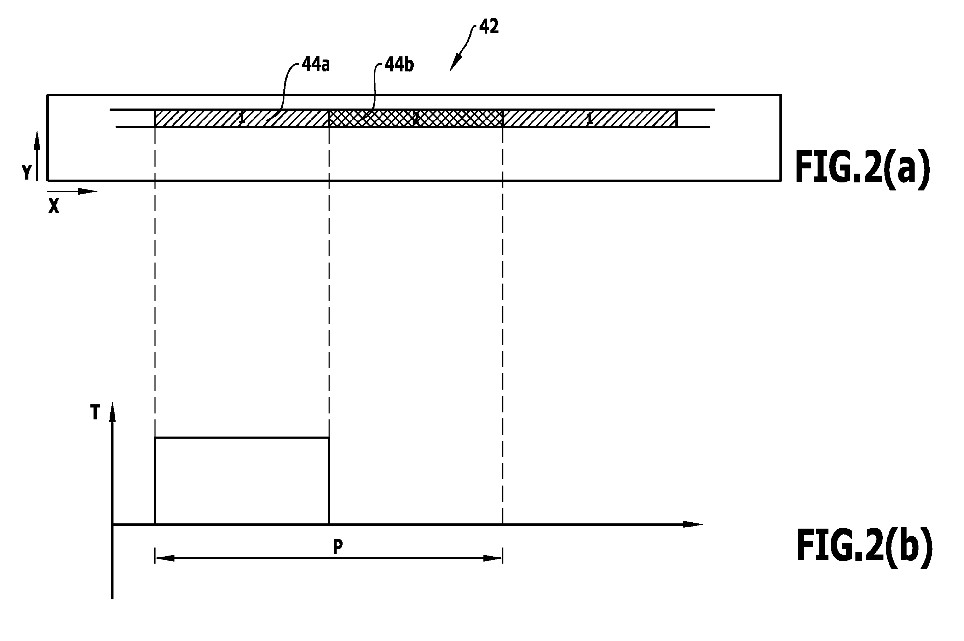

Bei einer aus dem Stand der Technik bekannten Ausführungsform, welche in Figur 2(a) schematisch dargestellt ist, umfasst eine Kodierungsspur 42 eine Mehrzahl von Hauptfeldern eines ersten Typs 44a und eines zweiten Typs 44b. Diese Hauptfelder 44a und 44b sind periodisch alternierend mit einer Längserstreckung in der Richtung X angeordnet. Das Hauptfeld des Typs 44a ist beispielsweise ein Nordpolfeld und ein Hauptfeld des zweiten Typs 44b ist ein Südpolfeld. Dementsprechend folgen Nordpolfelder und Südpolfelder periodisch alternierend in der Richtung X aufeinander. Die Hauptfelder 44a und 44b weisen alle in der Richtung X die gleiche Länge auf. In der zweiten Richtung Y weisen sie eine Längserstreckung auf und haben insbesondere die gleiche Breite.

Solch eine Kodierungsspur 42 lässt sich dadurch realisieren, dass eine Magnetisierung longitudinal (in der Richtung X) vorliegt, oder dass eine Magnetisierung in der dritten Richtung Z vorliegt (die in Figur 2(a) senkrecht zu der Zeichenebene ist).

Innerhalb der Hauptfelder des ersten Typs 44a und des zweiten Typs 44b ist die Magnetisierung einheitlich, das heißt homogen über die ganze Fläche des entsprechenden Hauptfelds. Dies ist in Figur 2(b) über ein Tastverhältnis T angedeutet. Das Tastverhältnis T charakterisiert das Verhältnis. Das Tastverhältnis T ist definiert als der Längenanteil von Feldbereichen des ersten Typs in den entsprechenden Hauptfeldern. Dieses Tastverhältnis T ist eine periodische Rechteckfunktion mit der Periode P der Anordnung der Hauptfelder des ersten Typs 44a und des zweiten Typs 44b. Das Hauptfeld des ersten Typs 44a besteht ausschließlich aus einem Polfeld des ersten Typs und das Hauptfeld 44b besteht ausschließlich aus einem Polfeld des zweiten Typs.

Insbesondere bei magnetisch kodierten Maßkörpern tritt das grundsätzliche Problem auf, dass bei kleinem Abstand des Sensorkopfs 14 in der dritten Richtung Z (bei kleinem Luftspalt) das resultierende Magnetfeld des Maßkörpers 12 vom ideal sinusförmigen Verlauf in der Richtung X abweicht und beispielsweise näher an einem rechteckförmigen Verlauf liegt. Dies ist verstärkt, wenn große Polbreiten (Länge der Hauptfelder in der ersten Richtung X) vorliegen. Entsprechend weichen die x-Komponente des Magnetfelds längs der Richtung X und die z-Komponente des Magnetfelds in der Richtung X vom idealen Sinusverlauf stark ab. Durch Vergrößerung des Abstands in der Z-Richtung lässt sich der Oberwellenanteil verringern, das heißt, der Verlauf wird "sinusförmiger".

Die Auswertungseinrichtung 36 mit einem entsprechenden Interpolator geht üblicherweise von einem idealen, sinusförmigen Verlauf des Magnetfelds des Maßkörpers aus. Bei kleinen Polbreiten (Länge in der Richtung X) kann durch die Sensoreinrichtung eine Oberwellenreduktion erfolgen. Eine einfache Oberwellenreduktion ist jedoch nicht mehr möglich, wenn die Polbreiten größer sind als beispielsweise eine entsprechende Sensorchipbreite der Sensoreinrichtung.

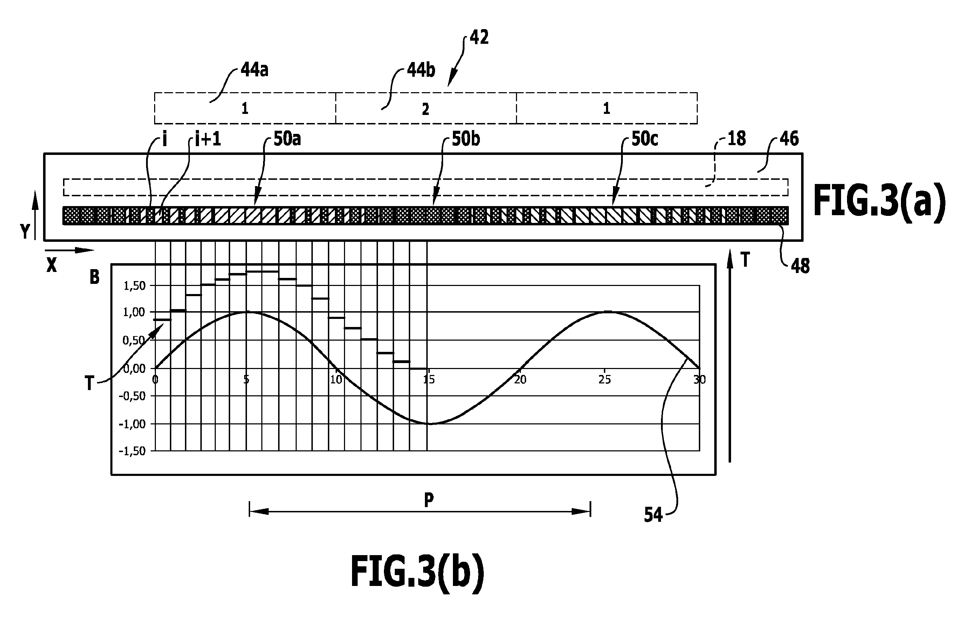

Ein Ausführungsbeispiel eines erfindungsgemäßen Positions-/Wegmesssystems umfasst einen Maßkörper 46 (Figur 3(a)) mit einer Kodierungsspur 48. Diese Kodierungsspur 48 ist als Inkrementalpositionsbestimmungsbereich ausgebildet. Fakultativ kann ein Absolutpositionsbestimmungsbereich 18 als weitere Kodierungsspur neben der Kodierungsspur 48 angeordnet sein.

Die Kodierungsspur 48 umfasst eine Mehrzahl von Hauptfeldern 50a, 50b, 50c usw., welche in der Richtung X aufeinanderfolgend nebeneinander angeordnet sind. Die Hauptfelder 50a, 50b usw. sind alternierend periodisch nebeneinander angeordnet mit einer Periode P (siehe Figur 3(b)).

Die Hauptfelder sind vom ersten Typ und vom zweiten Typ. Beispielsweise ist das Hauptfeld 50a vom ersten Typ und das Hauptfeld 50b vom zweiten Typ. Die Hauptfelder vom ersten Typ 50a und vom zweiten 50b sind periodisch alternierend angeordnet, das heißt die Nachbarfelder zu einem Hauptfeld des ersten Typs ist ein Hauptfeld des zweiten Typs und die Nachbarfelder von einem Hauptfeld des zweiten Typs sind Hauptfelder des ersten Typs.

Die Hauptfelder 50a, 50b sind nicht homogen ausgebildet, sondern in Unterfelder i unterteilt. Ein Hauptfeld 50a des ersten Typs ist bezogen auf sein Flächenintegral vom ersten Typ und ein Hauptfeld des zweiten Typs 50b ist bezüglich seines Flächenintegrals vom zweiten Typ.

In Figur 3(a) sind zum Vergleich Hauptfelder 44a, 44b eingezeichnet, wie sie aus dem Stand der Technik bekannt sind.

Die Unterfelder i innerhalb eines Hauptfelds 50a beziehungsweise 50b sind von unterschiedlichem Typ. Bei einem Ausführungsbeispiel (welches in Figur 3 (a) gezeigt ist), ist ein Hauptfeld des ersten Typs 50a in Unterfelder i des ersten Typs und des zweiten Typs unterteilt. Ein Hauptfeld des zweiten Typs 50b ist in Unterfelder i des ersten Typs und des zweiten Typs unterteilt. Dies bedeutet, dass ein Hauptfeld des ersten Typs auch Unterfelder des zweiten Typs enthält und ein Hauptfeld des zweiten Typs auch Unterfelder des ersten Typs enthält.

Die Unterfelder innerhalb eines Hauptfelds 50a beziehungsweise 50b sind auf eine definierte Weise ausgebildet und verteilt, um den Feldverlauf des Magnetfelds für den Sensorkopf 14 bezüglich Oberwellen reduktiv zu optimieren und insbesondere einen sinusförmigen Verlauf auch für kleine Abstände des Sensorkopfs 14 zu dem Maßkörper 46 zu erhalten. Dazu ist eine periodische Modulation für die Ausbildung und Anordnung der Unterfelder i innerhalb der Hauptfelder 50a, 50b vorgesehen. Periode dieser periodischen Modulation ist die Periode P der Anordnung der Hauptfelder 50a, 50b.

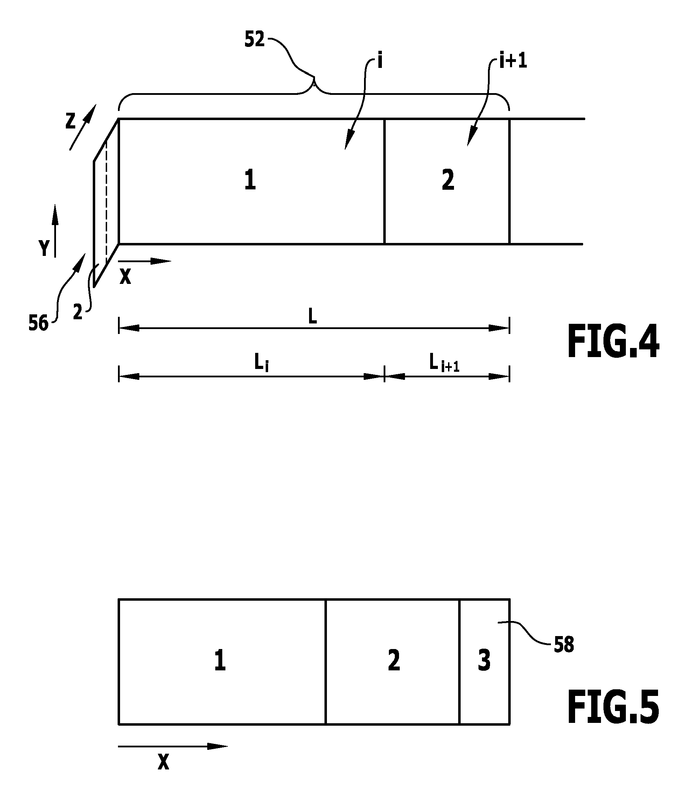

Unterfelder i weisen eine Länge $L_i$ in der Richtung X auf (Figur 4). Benachbarte Unterfelder i, i+1 bilden ein Paar {i, i+1} mit i beispielsweise ungerade. Solche Paare 52 an Unterfeldern i, i+1 weisen die gleiche Länge L in der ersten Richtung X auf. Ein Hauptfeld des ersten Typs 50a und ein Hauptfeld des zweiten 50b ist längs in der Richtung X diese entsprechenden Paare 52 gleicher Länge L unterteilt. Ein Paar 52 wiederum ist unterteilt in zwei Unterfelder i, i+1.

Das Tastverhältnis $L_i/L_{i+1}$ unterschiedlicher Paare 52 {i, i+1} variiert zur Reduktion von Oberwellen. Dieses Verhältnis ist sinusoidal:

$$T = L_i/L_{i+1} = \sin\left(\frac{2\pi X_i}{P}\right)$$

mit $X_i$ dem Ort des Paars {i, i+1} längs der ersten Richtung X.

Diese Modulation des Tastverhältnisses entspricht einer Pulsbreitenmodulation.

Bei einem Hauptfeld des ersten Typs 50a enthält dabei ein Paar 52 an Unterfeldern i, i+1 stets ein Unterfeld des ersten Typs, wobei ein Unterfeld des zweiten Typs auf eine Länge null reduziert sein kann. Beim Hauptfeld 50b des zweiten Typs enthält jedes Paar 52 ein Unterfeld des zweiten Typs mit endlicher Länge, wobei in einem Paar 52 ein Unterfeld des ersten Typs auf die Länge null reduziert sein kann. Für ein Hauptfeld eines bestimmten Typs wird das Tastverhältnis T gemäß der obigen Formel so gewählt, dass das Feld i+1 von dem bestimmten Typ ist.

In Figur 3(b) ist der Verlauf des Tastverhältnisses T längs der Richtung X gezeigt. Diese Tastverhältnismodulation mit der Periode P bewirkt einen effektiven Feldverlauf für den Sensorkopf 14, welcher Oberwellenreduziert ist und insbesondere sinusförmig ist (Figur 3 (b), Bezugszeichen 54). Dadurch ergibt sich auch für kleine Abstände des Sensorkopfs 14 in der dritten Richtung Z zu dem Maßkörper 46, das heißt für kleine Luftspalte, ein sinusförmiger Feldverlauf 54 für die entsprechenden Magnetfeldkomponenten, insbesondere $B_z$ und $B_x$ längs der ersten Richtung X. Ein entsprechender Oberwellen minimierter Verlauf lässt sich beispielsweise bereits für Luftspalte (Abstände) in der Größenordnung von 0,1 mm erreichen. Dies bedeutet wiederum, dass die Amplitude des entsprechenden Felds für den Sensorkopf 14 aufgrund eines geringen Abstandes sehr hoch ist, sodass sich eine große Signalstärke ergibt. Man erhält dadurch auch für geringe Luftspalte eine hohe Signalstärke mit minimierter Linearitätsabweichung.

Durch die erfindungsgemäße Lösung lassen sich Positionen beziehungsweise Wege des Sensorkopfs 14 relativ zu dem Maßkörper 46 mit hoher Genauigkeit messen, auch wenn der Abstand zwischen dem Sensorkopf 14 und dem Maßkörper 46 in der dritten Richtung Z relativ klein ist und insbesondere kleiner 4 mm ist.

Eine typische Periode P liegt bei 2 cm oder 4 cm.

Die Unterfelder i sind bei einer Ausführungsform, wie in Figur 4 angedeutet, durch in der dritten Richtung Z magnetisierte Magnete 56 hergestellt, das heißt Nordpol und Südpol dieser Magnete 56 folgen in der dritten Richtung Z aufeinander, wobei entsprechende Nordpolfelder und Südpolfelder dieser Magnete 56 eine Ausdehnung in der ersten Richtung X und in der zweiten Richtung Y haben.

Es ist auch möglich, eine entsprechende Polverteilung durch Magnetisierung der Oberfläche des Maßkörpers zu realisieren.

Das für den Sensorkopf 14 wirksame Polfeld ist dasjenige, welches an der Oberfläche liegt, das heißt, welches dem Sensorkopf 14 in der dritten Richtung Z nächstliegend ist. Es kann zusätzlich das Magnetfeld in X-Richtung und Z-Richtung im Sensorkopf 14 ausgewertet werden.

Bei der erfindungsgemäßen Lösung sind die Hauptfelder des ersten Typs 50a und des zweiten Typs 50b in Unterfelder i aufgeteilt, wobei in diesen Unterfeldern eine Variation mit der Periode P der Hauptfelderanordnung erfolgt.

Es liegt insbesondere eine periodische Modulation vor, um Oberwellen für die Sensoreinrichtung 20 zu reduzieren.

Insbesondere ist die Variation in den Unterfeldern eine Tastverhältnisvariation von nächst benachbarten Unterfeldern i, i+1.

Es ist grundsätzlich möglich, dass für diese Variation nicht nur nächst benachbarte Unterfelder sondern auch übernächst benachbarte Unterfelder oder weiter beabstandete Unterfelder herangezogen werden.

Bei dem oben beschriebenen Ausführungsbeispiel mit der Variation in der Richtung X ist das Hauptfeld 50a flächen-integral betrachtet vom ersten Typ. Es weist jedoch Unterfelder vom zweiten Typ auf, wobei die Gesamtlänge der Unterfelder des ersten Typs in der ersten Richtung X gegenüber der Gesamtlänge der Unterfelder des zweiten Typs in dieser Richtung überwiegt. Entsprechend umgekehrt sind die Verhältnisse für die Hauptfelder 50b.

Es ist dabei beispielsweise vorgesehen, dass jedes individuelle Polfeld (Unterfeld) die gleiche Magnetisierungsstärke aufweist und sich die Magnetisierungsstärke nur im Vorzeichen unterscheidet. Die Variation erfolgt allein durch die entsprechende Flächenaufteilung.

Es ist alternativ oder zusätzlich auch möglich, dass die Kodierungsstärke entsprechend periodisch moduliert variiert wird, das heißt die Magnetisierungsstärke variiert wird. Auch dadurch lässt sich eine Oberwellenreduktion erreichen beziehungsweise unterstützen.

Bei einer periodischen Verteilung von Unterfeldern ist es von besonderer Bedeutung, dass die Periode mit der Periode der Hauptfelder übereinstimmt, um eine Oberwellenreduktion zu erhalten. Eine Oberwellenreduktion ist auch möglich, wenn Unterfelder rein stochastisch verteilt in den Hauptfeldern angeordnet sind.

Es kann grundsätzlich auch vorgesehen sein, dass die Oberwellenreduktion unter Hinzuziehung von Unterfeldern eines dritten Typs 58 (Figur 5) erreicht wird, wobei Unterfelder des dritten Typs 58 magnetisch neutral sind, das heißt nicht magnetisiert sind. Es ist dabei beispielsweise möglich, dass in ein Hauptfeld des ersten Typs 50a Unterfelder des dritten Typs 58 in Kombination mit Unterfeldern des ersten Typs kombiniert werden. Gegebenenfalls können auch noch Unterfelder des zweiten Typs hinzukombiniert werden. Entsprechend können in Hauptfeldern des zweiten Typs 50b Unterfelder des zweiten Typs und Unterfelder des dritten Typs 58 kombiniert werden und gegebenenfalls können auch Unterfelder des ersten Typs hinzukombiniert werden. Durch eine entsprechende periodische Modulation lässt sich wie oben beschrieben eine Oberwellenreduktion erreichen.

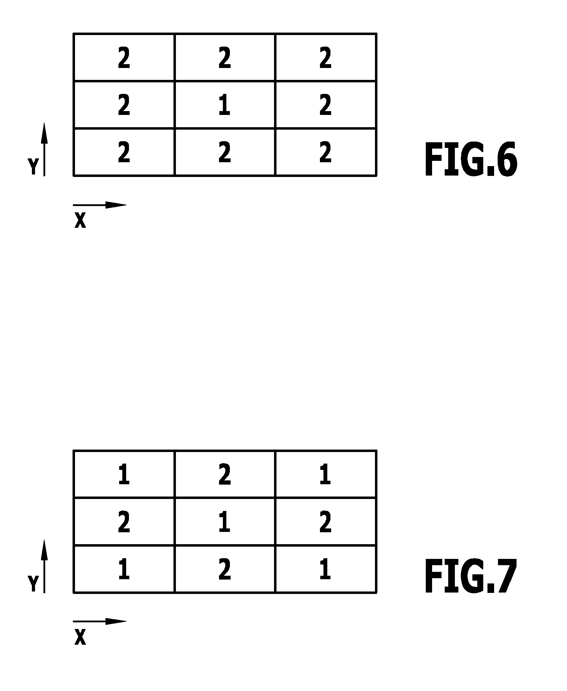

Es ist auch möglich, wie in Figur 6 und 7 angedeutet, dass eine Variation in den Unterfeldern, nicht nur längs der ersten Richtung X erfolgt, sondern auch längs der zweiten Richtung Y vorgesehen ist. Dadurch lässt sich in der Richtung Y eine feinere Unterteilung zur Oberwellenbeeinflussung insbesondere Minimierung von Oberwellen erreichen.

Durch die erfindungsgemäße Lösung lassen sich Positions-/Wegmesssysteme und insbesondere magnetische Positions-/Wegmesssysteme mit magnetisch kodierten Maßkörpern bereitstellen, welche auch bei geringem Abstand und insbesondere geringem Luftspalt zu einem Sensorkopf bei großen Polbreiten verringerte Linearitätsabweichungen aufweisen, und welche einen hohen Signal-Rauschabstand aufgrund höheren erreichbaren magnetischen Feldstärken bei der Sensorbeaufschlagung haben.

**Patentansprüche**

1.  Positions-/Wegmesssystem, umfassend:

    - mindestens einen magnetisch kodierten Maßkörper (46) mit mindestens einer Kodierungsspur (48); und
    - eine Sensoreinrichtung (20) mit mindestens einem für die
    Kodierung sensitiven Sensor,
    wobei die mindestens eine Kodierungsspur (48) mindestens in einer ersten Richtung (X) periodisch alternierend angeordnete Hauptfelder mindestens eines ersten Typs (50a) und eines zweiten Typs (50b) aufweist, **dadurch gekennzeichnet, dass** die Hauptfelder des ersten Typs (50a) und die Hauptfelder des zweiten Typs (50b) jeweils in Unterfelder (i, i+1) von mindestens zwei unterschiedlichen Typen unterteilt sind, wobei die Unterfelder vom ersten Typ und zweiten Typ Nordpolfelder und Südpolfelder sind, dass eine Länge und/oder Kodierungsstärke der Unterfelder (i, i+1) innerhalb eines Hauptfeldes (50a; 50b) mindestens in der ersten Richtung (X) variiert und dass bei den Hauptfeldern des ersten Typs (50a) die Gesamtlänge in der ersten Richtung und/oder Gesamtfläche von Feldbereichen des ersten Typs größer ist als die Gesamtlänge und/oder Gesamtfläche von Feldbereichen, welche nicht vom ersten Typ sind, und bei den Hauptfeldern (50b) des zweiten Typs die Gesamtlänge in der ersten Richtung und/oder Gesamtfläche von Feldbereichen des zweiten Typs größer ist als die Gesamtlänge und/oder Gesamtfläche von Feldbereichen, welche nicht vom zweiten Typ sind.

2.  Positions-/Wegmesssystem nach Anspruch 1, **dadurch gekennzeichnet, dass** die Unterfelder (i) eines Hauptfeldes (50a; 50b) mindestens zwei unterschiedliche Typen aus folgenden Typen umfassen: erster Typ, zweiter Typ, und dritter oder weiterer Typ.

3.  Positions-/Wegmesssystem nach Anspruch 1 oder 2, **dadurch gekennzeichnet, dass** die mindestens eine Kodierungsspur (48) eine Ausdehnung in der ersten Richtung (X) und in einer zweiten Richtung (Y) quer zur ersten Richtung (X) aufweist und die Sensoreinrichtung (20) beabstandet zu dem mindestens einem Maßkörper (46) in einer dritten Richtung (Z), welche quer zu der ersten Richtung (X) und quer zu der zweiten Richtung (Y) ist, positioniert ist.

4.  Positions-/Wegmesssystem nach einem der vorangehenden Ansprüche, **dadurch gekennzeichnet, dass** die erste Richtung (X) eine Messrichtung für die relative Position und/oder Bewegung der Sensoreinrichtung (20) zu dem mindestens einen Maßkörper (46) ist.

5.  Positions-/Wegmesssystem nach einem der vorangehenden Ansprüche, **dadurch gekennzeichnet, dass** die mindestens eine Kodierungsspur (48) als Inkrementalpositionsbestimmungsbereich ausgebildet ist.

6.  Positions-/Wegmesssystem nach einem der vorangehenden Ansprüche, **dadurch gekennzeichnet, dass** die Variation in den Unterfeldern (i) der Hauptfelder (50a; 50b) so gewählt ist, dass ein effektiver sensorwirksamer Feldverlauf der mindestens einen Kodierungsspur (48) für die Sensoreinrichtung (20) bezüglich Oberwellen minimiert ist und insbesondere sinusförmig ist.

7.  Positions-/Wegmesssystem nach einem der vorangehenden Ansprüche, **dadurch gekennzeichnet, dass** die Variation in den Unterfeldern (i) der Hauptfelder (50a; 50b) periodisch mit der Periode (P) der Hauptfelderanordnung ist.

8. Positions-/Wegmesssystem nach einem der vorangehenden Ansprüche, **dadurch gekennzeichnet, dass** die Variation in den Unterfeldern (i) periodisch oder stochastisch moduliert ist.

9. Positions-/Wegmesssystem nach einem der vorangehenden Ansprüche, **dadurch gekennzeichnet, dass** die Variation in den Unterfeldern (i) eine Tastverhältnisvariation ist, und insbesondere, dass das variierende Tastverhältnis (T) sinusoidal ist.

10. Positions-/Wegmesssystem nach Anspruch 9, **dadurch gekennzeichnet, dass** das variierende Tastverhältnis (T) eine Variation der Länge ($L_i$) mindestens in der ersten Richtung von Unterfeldern (i) ist oder umfasst, und insbesondere, dass die Variation eine Variation des Verhältnisses der Länge ($L_i$, $L_{i+1}$) mindestens in der ersten Richtung von nächst- oder übernächst- benachbarten Unterfeldern (i, i+1) unterschiedlichen Typs ist.

11. Positions-/Wegmesssystem nach Anspruch 9 oder 10, **dadurch gekennzeichnet, dass** mindestens in der ersten Richtung (X) Unterfelder (i, i+1) unterschiedlichen Typs alternierend angeordnet sind, wobei Paare (52) von Unterfeldern (i, i+1) unterschiedlichen Typs aufeinanderfolgend angeordnet sind und die Paare (52) die gleiche Länge (L) mindestens in der ersten Richtung (X) aufweisen und das Verhältnis der Längen ($L_i/ L_{i+1}$) mindestens in der ersten Richtung (X) bei unterschiedlichen Paaren (52) variiert, und insbesondere, dass das Verhältnis der Längen ($L_i/ L_{i+1}$) innerhalb eines Paares sinusoidal ist.

12. Positions-/Wegmesssystem nach einem der Ansprüche 9 bis 11, **dadurch gekennzeichnet, dass** das variierende Tastverhältnis (T) eine Variation der Kodierungsstärke ist oder umfasst.

13. Positions-/Wegmesssystem nach einem der vorangehenden Ansprüche, **gekennzeichnet durch** eine Variation bezüglich Länge und/oder Kodierungsstärke von Unterfeldern in einer zweiten Richtung quer zur ersten Richtung.

14. Positions-/Wegmesssystem nach einem der Ansprüche 2 bis 13, **dadurch gekennzeichnet, dass** die Unterfelder vom dritten Typ (58) magnetisch neutrale Felder sind.

15. Positions-/Wegmesssystem nach einem der vorangehenden Ansprüche, **dadurch gekennzeichnet,**

**dass** die Hauptfelder vom ersten Typ (50a) und zweiten Typ (50b) über ihre Fläche integriert Nordpolfelder und Südpolfelder sind.

# FIG.1

FIG.2(a)

FIG.2(b)

EP 2 236 990 A2

FIG.3(a)

FIG.3(b)

FIG.4

FIG.5

| 2 | 2 | 2 |
|---|---|---|
| 2 | 1 | 2 |
| 2 | 2 | 2 |

Y ↑
X →

**FIG.6**

| 1 | 2 | 1 |
|---|---|---|
| 2 | 1 | 2 |
| 1 | 2 | 1 |

Y ↑
X →

**FIG.7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008055680
- US 20080061771 A1
- DE 1930976
- DE 10028136 A1
- DE 102005055905 A1
- DE 102007008870 A1
- DE 10052086 A1

**In der Beschreibung aufgeführte Nicht-Patentliteratur**

- **T. Burkhardt ; A. Feinäugle ; S. Fericean ; A. Forkl.** Lineare Weg- und Abstandssensoren. Verlag moderne Industrie, Bibliothek der Technik, 2004, vol. 271